# EUROPEAN PATENT APPLICATION

(11) **EP 4 524 011 A1**
(43) Date of publication of application: **19.03.2025**
(21) Application number: 23198053.3
(22) Date of filing: 18.09.2023

(54) **POWERTRAIN FOR A PEDAL VEHICLE, AND METHOD**

(71) Applicant: intuEdrive BV, 3360 Bierbeek (BE)
(72) Inventor: Keppens, Tomas, 2800 Mechelen (BE); Heidbuchel, Jorrit, 3010 Kessel-Lo (BE); Ceuppens, Jander, 3001 Heverlee (BE)
(74) Representative: IPLodge bv

(57) **Abstract**

The invention relates to a powertrain (10) for a pedal vehicle (1), such as a bicycle, the powertrain (10) configured to transfer an input torque at least partially to a wheel hub (3), the input torque to be applied by a user to a pedal crank structure (2), the powertrain (10) comprising:
the pedal crank structure (2);
a drive device of which a drive (11) is configured to be coupled directly or indirectly to a pedal crank structure (2), and especially of which a further drive (12) is configured to be coupled directly or indirectly to the wheel hub (3) for torque transmission with the wheel hub (3); and
a control device (13) that is configured to control the drive device, to receive traction data as an information about the current traction of the pedal vehicle (1) on the ground, and to determine a traction loss event parameter based on the traction data,
wherein in order to provide feedback to the user, and especially in order to affect or improve the current traction, the control device (13) is configured to reduce a resistance torque at the pedal crank structure (2), and optionally to reduce a torque applied to the wheel hub (3), by controlling the drive device when the traction loss event parameter indicates a traction loss of the pedal vehicle (1).

## Description

The invention relates to a powertrain for a pedal vehicle, such as a bicycle, the powertrain comprising a drive device and a control device configured to control the drive device. The invention further relates to methods to control a powertrain.

The powertrain may be used in an electrically assisted pedal vehicle, especially bicycle or the like. These vehicles can be propelled conjointly by a human and by force of a drive.

When the traction is bad, e.g. when it is wet or when riding on particles like sand, such pedal vehicles may be subject to a loss of traction and the user may face an increased risk for an accident.

It is an object of the invention to provide solutions where the pedal vehicle is improved in terms of traction under consideration of an ergonomic usability. Further, it is an object to enhance safety with respect to the pedal vehicle. Particularly it is an object to avoid or reduce disadvantages of known solutions.

The object of the invention is solved by the features of the independent claims. Preferred implementations are detailed in the dependent claims.

Thus, the object is particularly solved by a powertrain for a pedal vehicle, such as a bicycle, wherein the powertrain is configured to transfer an input torque applied at least partially to a wheel hub, and wherein the input torque is to be (i.e./e.g. shall be or can be) applied by the user to a pedal crank structure comprised by the powertrain, the powertrain comprising:
a drive device of which a drive is configured to be coupled directly or indirectly to a pedal crank structure, and especially of which a further drive is configured to be coupled directly or indirectly to the wheel hub for torque transmission with the wheel hub; and
a control device that is configured to control the drive device, to receive traction data as an information about the current traction of the pedal vehicle on the ground, and to determine a traction loss event parameter based on the traction data.
In order to provide feedback to the user, and optionally / especially in order to affect or improve the current traction, it is advantageously provided that the control device is configured to reduce a resistance torque at the pedal cranks / the pedal crank structure, and optionally / especially to reduce a torque applied to the wheel hub, by controlling the drive device when the traction loss event parameter indicates a traction loss of the pedal vehicle. The control device may thus be configured as and/or comprise a traction control device which means that the control device can specifically address (affect or improve) the current traction.

In other words, particularly, a powertrain for a vehicle with pedals is proposed. The powertrain as proposed herein shall comprise a drive unit including at least one, exactly one, two, exactly two, or more of a/an motor and/or actuator, and furthermore a control unit for the drive unit. The drive unit is typically configured to assist in propulsion, i.e. to transmit an input power (e.g. from the user and/or from a battery or the like) into kinetic energy of the pedal vehicle especially including amendments in a gear ratio effective between pedal crank structure and wheel hub. The drive unit is typically substantially integrated in the mechanical link between pedal crank structure and driven wheel. For example, the drive unit may receive the input torque at least in part and generate electrical power therefrom, preferably which electrical power could be used again for propulsion by means of the drive unit possibly also applying a torque to the wheel hub. As another example, the drive unit may have or may be a shifting device affecting a gear ratio effective in the mechanical link between pedal crank structure and wheel hub. The control unit is specifically provided for controlling the drive unit with respect to affecting or enhancing traction. There may be another control unit for controlling the drive unit. The control unit may for this purpose receive information about the present grip of the vehicle which may be data from sensors. The control unit may derive whether the event of insufficient grip is present or not and may therefore provide a parameter value corresponding to the event. The parameter value may be the basis for the control unit actively controlling the drive unit when the event of insufficient grip is present in order to make the user feel that the traction is lost, e.g. by having the user applying less torque to the pedal cranks and/or the pedal crank structure. It may be that the torque at the wheel hub for propulsion is reduced as well.

The object is further solved by a method to control the powertrain as described herein, which method comprises (the steps of):
receiving traction data; determining a traction loss event parameter based on the traction data; and
reducing the resistance torque and/or the torque applied to the wheel hub when the traction loss event parameter indicates the traction loss by controlling the drive device, particularly the drive and/or the further drive.

The object is further solved by a method to control the powertrain as described herein or a powertrain for a pedal vehicle, such as a bicycle, the powertrain configured to transfer an input torque applied by a user to a wheel hub, which method comprises (the steps of):
receiving traction data as an information about the current traction of a pedal vehicle equipped with the powertrain on the ground,
determining a traction loss event parameter based on the traction data, and
reducing a torque transmission between pedal crank structure and the wheel hub when the traction loss event parameter indicates a traction loss, wherein reducing is conducted by controlling a drive device of the powertrain. It is particularly provided that said drive device comprises an electric drive, especially an electric actuator, and particularly that said drive device is comprised by a clutch device configured for coupling and for decoupling the pedal crank structure to the wheel hub and/or for torque transmission between the pedal crank structure and the wheel hub. Optionally, reducing includes shutting off said torque transmission. The clutch device may be a power split device.

The proposed solutions are based on the idea that the user may pedal against a lower resistance or may even pedal or step through or against substantially nothing. This may be realized when the control device of the drive device receives an information about a traction loss, e.g. at the driven wheel and/or the wheel hub. Particularly, the present invention provides that the traction of the pedal vehicle can be enhanced. Especially the correspondingly designed control device for the drive device advantageously may not only control the drive device with regard to propulsion, power or the like, but simultaneously with regard to optimizing traction.

The powertrain may be implemented in and/or a comprise a frame of/for the pedal vehicle.

The powertrain, especially the drive device, may comprise one drive or two drives. In any case, but especially in case there is only one drive, the drive device may be configured to reduce the resistance torque and the torque applied to the wheel hub, especially simultaneously.

The pedal vehicle, especially the bicycle, substantially refers to a vehicle with at least two wheels, especially with at least one driven wheel to be driven via the wheel hub. The pedal vehicle may comprise at least one front wheel hub. The pedal vehicle may comprise at least one at least one rear wheel hub. For example, the pedal vehicle may comprise two wheels (a typical bicycle arrangement with a steered front wheel) three wheels (e.g. trike-like with a front wheel and two rear wheels, with the front wheel and/or rear wheels steered) or four wheels (e.g. car-like with two front and two rear wheels, with at least the front or rear wheels steered).

The pedal vehicle is meant as a vehicle to be driven at least partially by means of pedals on pedal cranks. As a common construction, the pedal cranks are mounted directly on the pedal crank structure.

The pedal vehicle is typically meant as an electrically assisted pedal vehicle and/or hybrid vehicle, for example powered by means of both electricity and human power driving the wheel hub(s). The pedal vehicle may be a handbike or handcycle, i.e. driven at least partially by arms and/or hands.

The input torque is typically understood as the torque the user may apply to the pedal cranks stepping continuously thereupon which torque is present at the pedal crank structure. The input torque multiplied by the cadence and/or rotational frequency of the pedal cranks / the pedal crank structure translates to an input power. The powertrain may transfer the input torque at least partially or fully to the wheel hub. The powertrain may receive the input torque and/or input power. The powertrain may store and/or split and/or transmit and/or direct the input torque/power to the wheel hub, at least in part and/or at least time-delayed.

The user is typically understood as a human which can apply the input torque by means of his legs and/or arms.

The wheel hub is typically understood as the rotational center of a wheel to be driven which wheel hub may be substantially fixedly coupled relative to the tire(s) that run on the ground and that may be subject to the traction loss.

The drive device is meant to be understood as an arrangement and/or system comprising at least one drive and/or actuator, especially a plurality thereof. The drive device may comprise the drive and optionally the further drive. Even more than two drives may be provided. The drives may be similar drives, especially similar in terms of function (rotational movement, translational movement, combinations thereof, or the like). The drive and/or the further drive may be electrical drives, for example direct current drives, especially motors. The drive and/or the further drive may be configured to provide a force, a torque and/or revolution speed, especially in a controllable manner. The drive device may be able to recuperate electrical energy, i.e. work as a generator, e.g. by means of rotating one of the drives from human power input or from input from the wheel hub in order to brake the pedal vehicle or the like.

The terms `coupling', `coupled to' and/or `coupled with' substantially refer to coupling in a mechanical sense. Said terms typically include and/or imply, but are not limited to, motion-coupled and/or rotationally coupled in order to transfer and/or affect movements based on the coupling.

The pedal crank structure typically comprises or consists of a shaft or pedal crank shaft, especially the shaft configured for connecting/coupling two pedal cranks on opposite sides of the shaft. The pedal cranks are typically arranged substantially in parallel to each other. The pedal cranks are typically arranged oblique, especially substantially perpendicular, to the pedal crank shaft. The pedal cranks especially point in substantially opposite directions (e.g. in case of a bicycle and/or pedal vehicle driven at least by means of legs) or in substantially the same directions (e.g. in case of a hand bike and/or pedal vehicle driven at least by means of arms). The pedal crank shaft is preferably a metal shaft, especially made of steel or aluminum. The pedal crank shaft is preferably a monolithically shaped structure. The pedal crank shaft is typically configured for a separate attachment of the pedal cranks. The invention may provide that a pedal crank structure with different configurations can be realized, for example with pedal or pedals only on one side.

The term 'torque transmission' or 'torque transfer' typically means and/or implies that a rotational connection is given in that torque and especially mechanical power (torque multiplied by revs) can be transmitted between two components.

The control device is preferably built, designed and/or configured to control the drive device. By means of controlling, the drive device may be driven by means of the control device, for example with respect to torque, position, speed/revs and/or the like. The control device may be electrically wired with and/or connected to the drive device. The control device may be connected wirelessly or wired with control means, such as a button and/or a touchscreen to be used by the user. The touchscreen and/or button may be configured to send control commands to the control device, for example to affect the current traction by controlling the drive device.

A battery (or a battery dock for a battery) may be provided, e.g. as a part of the pedal vehicle and/or of the powertrain. The battery may serve to store and to provide electrical energy, especially for driving/controlling the drive device and/or for operating the control device. The drive device may store energy in the battery by means of recuperation. The battery may be removable from the pedal vehicle e.g. for charging the battery. The drive device, the control device and the battery (or a battery dock for the battery) may be wired for transfer of electricity. Typically, a lithium based battery is used.

The current traction typically refers to the pedal vehicle's present ability to transmit torque to the ground. The current traction typically includes the present grip of the driven wheel / wheel hub on the ground. The current traction may be quantified by means of traction data. Traction data typically refers to information about the current traction. Traction data may include information about a slip between the wheel hub and the ground, for example in the range between 0 and 100 %. Traction data may include information about a maximum torque to be technically applicable to the wheel hub.

The traction loss event parameter can be derived from and/or can be included in the traction data. The traction loss event parameter can be in an easy configuration either 'zero' or 'one', especially wherein 'one' would imply that the situation has occurred, that the current traction is insufficient for a normal pedal vehicle operation. The traction loss event parameter can assume more than two values, for example where a low value would imply no traction loss and where a higher value would imply a higher likeliness of traction loss, e.g. within a certain range, e.g. in the range between zero and one. The traction loss event parameter can be a variable, especially assuming a plurality of possible values. Said parameter is especially regularly updated, for example at a frequency of at least 1 Hz, 5 Hz, 10 Hz, or more., for example the frequency may be at least 100 Hz and/or up to 2000 Hz, especially at least 200 Hz and/or up to 1000 Hz.

Feedback to the user may be a haptic feedback. The feedback may be perceptible, especially distinguishable from normal pedalling operation, for example in that the user actively recognizes the traction loss, especially intuitively.

Affect or improve (current) traction typically relates to having an influence on the grip of the wheel hub relative to the ground, particularly in terms of enhancing the grip. For example, the grip may be bad in case the wheel hub rotates too fast or too slow for the current speed of the pedal vehicle. For example, the wheel hub may rotate faster or slower than the speed of the pedal vehicle needs as a rotational speed of the tire fitting to the current ground speed, e.g. the tire slips on the ground due to too much propulsion at too little adhesion relative to the ground. For example, to improve the grip it may be an option to reduce torque applied to the wheel hub (i.e. in the sense of a torque control), or to slow down the wheel hub (i.e. in the sense of a speed control), or to stop further acceleration of the wheel hub in terms of its rotation so that the tire driven by the wheel hub may assume a speed closer to the corresponding speed of ground.

The resistance torque typically relates to the torque or momentum that a user faces when riding the pedal vehicle stepping on the pedals of the pedal vehicle. For example, when the resistance torque is reduced, e.g. spontaneously during riding, by a mechanism within the powertrain, the cadence and/or angular velocity of the pedal crank structure may quickly increase at least for a section of a full pedal crank rotation and/or temporarily. The user may step through. For example, when the mechanism lays in quickly shifting down, the user may step through. As another example, when the mechanism lays in decoupling the pedal crank structure from their rotational coupling to the wheel hub (or instead of decoupling at least limiting the rotational connection in terms of torque), the user may as well step through.

In the context of cycling, cadence typically refers to the rate at which a cyclist or user pedals. More precisely, it's the number of revolutions of the pedal crank structure per minute. The cadency is akin to the rhythm of pedaling. Cadence is often measured in revolutions per minute, or RPM. For example, a cadence of 60 RPM means that one pedal completes a full circle 60 times in a minute. Different users have different preferred or ergonomically optimal cadences, depending on their fitness level, the type of cycling they're doing (for example, road cycling, mountain biking, or time trialing), and personal preference.

In the following, implementations of the invention are described. The implementations may be combined or considered individually. Specific aspects/features described in the context of any of the implementations may be considered individually or in combination. The implementations pursue further optimization of the invention and provide advantages as described herein.

In a first preferred implementation the control device is configured to, preferably at least substantially, match a speed of the wheel hub with a speed of the pedal vehicle when the traction loss event parameter indicates the traction loss by controlling, especially driving and/or actuating, particularly reducing in speed and/or in torque, the drive device. The drive device may be controlled in that a torque applied to the wheel hub is reduced. For example, the drive device may be controlled, e.g. driven or actuated, in order to effect that the wheel hub adapts its speed to a corresponding speed of the ground, e.g. slows down, e.g. to avoid excessive slip or even falling over of the pedal vehicle. Driving/controlling the drive device may imply that a drive of the drive device (e.g. the drive and/or the further drive) is driven/controlled.

When the traction loss event parameter indicates traction loss, the control device may control the drive device in that the torque applied to the wheel hub is at least substantially reduced or fully taken away. Further and/or consecutively, the control device may control the drive device, especially after the traction loss event parameter has indicated the traction loss or when the traction loss event parameter does not indicate the traction loss anymore, by especially gradually building up torque again until traction is recovered. The control device may be configured accordingly.

It may be that the drive, or the further drive, or the drive and the further drive are controlled. It is preferably understood that in case of the indication of the traction loss the drive device is actively controlled, typically with the intention that a reaction is conducted with respect to affecting or avoiding the traction loss. So although the drive device may be driven or controlled all the time e.g. in a normal drive mode, the expression 'controlling the drive device' in the sense of the present invention typically relates to providing a specific reaction due to the detected traction loss.

In another implementation the control device is configured to deactivate the drive device, particularly the drive and/or the further drive, when the traction loss event parameter indicates the traction loss. For example, the drive and/or further drive may be deactivated in that substantially no mechanical power output is provided and/or no input power is consumed by the drive device or a/the drive thereof. The deactivation may lay in that a generator mode is activated in which electricity may be generated due to a torque input, e.g. from the wheel hub. The deactivation may lay in that a no-torque mode is activated in which the drive device may spin freely. It may be provided that a rotation of the drive device is possible at little to not resistive torque. For example, deactivation of the drive device may be configured so that the user may pedal against instantaneously less or even against substantially zero counter torque. This enhances user feedback and ergonomics of the powertrain.

In another implementation the drive device, particularly the drive, is coupled directly to the pedal crank structure, so that the drive device and the pedal crank structure are fixedly coupled especially in terms of rotation, e.g. via one or more transmission elements or gears, a chain, a belt or via direct attachment. This implementation is meant to imply that the drive device may drive and/or be driven by the pedal crank structure by means of a downright connection. It may be that any movement of the drive device, especially the drive, may cause a movement of the pedal crank structure, and vice versa. For example, the drive device may comprise a gear that meshes with a gear on the pedal crank structure.

For example, the drive coupled directly to the pedal crank structure may provide the resistance torque at least partially or fully. In case of traction loss, the drive coupled directly to the pedal crank structure may be reduced in torque and/or switched off so that the user may not be able to provide any torque input or at least a substantially reduced torque input, typically rather the user may step through with provides inherent user feedback.

The drive device, especially its drive and/or further drive, may alternatively or additionally have a stator and a rotor, wherein the rotor is coaxially arranged with and/or mounted on the pedal crank structure, and especially the stator is arranged to drive the rotor, particularly surrounding the rotor.

The drive device may have a clutch coupled to the pedal crank structure and configured to uncouple the pedal crank structure from the wheel hub and/or the drive device, especially when the traction loss is indicated.

The drive device is typically configured to assist in propulsion, i.e. to transmit an input power into kinetic energy of the pedal vehicle and especially including amendments in a gear ratio effective between pedal crank structure and wheel hub.

The drive device may have a/the further drive configured to be coupled directly or indirectly to the wheel hub for torque transmission with the wheel hub. The further drive could be an electric drive arranged at the wheel hub to directly drive the corresponding tire. The further drive could be an electric drive arranged distant from the wheel hub to provide torque and/or power to the tire at the wheel hub. When the drive is coupled to the pedal crank structure and the further drive coupled to the wheel hub, a serial hybrid configuration can be achieved in that the drive receives the user input torque (typically in the sense of a generator), which is transmitted as an electrical power to the further drive to drive the wheel hub only based on the electrical power. In case of traction loss, the drive at the pedal crank structure may be reduced in torque and/or switched off so that the user may not be able to provide any torque input or at least a substantially reduced torque input.

In another implementation the drive device, particularly the drive, is coupled indirectly to the pedal crank structure, so that the drive device and the pedal crank structure at least or at best affect each other in terms of rotation, e.g. allowing a certain slip and/or the drive device affecting a gear-ratio by its rotation and/or actuation. This implementation is meant to imply that the drive device not necessarily has a downright connection to the pedal crank structure, but may have a connection that is passed through in an intermediate device and/or that is affected in the path to the pedal crank structure. In some embodiments, it may even be that the drive device is or has a gear shifter that shifts gears and thus is indirectly coupled (and particularly with respect to the pedal crank structure rotation) to the pedal crank structure.

In another implementation a power split device with three rotational interfaces (or at least three rotational interfaces or more than three rotational interfaces) is provided. Each of said three rotational interfaces may be coupled directly or indirectly to another component or part. A direct coupling is preferred, e.g. so that one movement directly induces another movement. The three rotational interfaces may be arranged coaxially, parallelly, and/or at an angle with respect to each other. The angle may be 90±45 or 90±5 degrees.

Although in the following it is differentiated between a first/second/third rotational interface, it may be understood that a certain name of "first, second or third interface" can be replaced with another one remaining in the list of the "first, second or third interface". In other words, as an example, if it is written that the first rotational interface is coupled to another component, it may be that the second or third rotational interface can be coupled alternatively or additionally to said component.

The power split device may be coupled with a first rotational interface of the three rotational interfaces to the drive device, particularly to the drive and/or further drive, particularly exclusively to the drive or exclusively to one drive of the drive device. The drive device may be arranged coaxially and/or parallelly to the first rotational interface. The drive device may be arranged coaxially and/or parallelly to the pedal crank structure and/or the first rotational interface, e.g. in order to drive and/or to be driven by the first rotational interface and/or the pedal crank structure, respectively, and/or to brake/stop/accelerate the first rotational interface or pedal crank structure, respectively.

The power split device may be coupled with a second rotational interface of the three rotational interfaces to the pedal crank structure, particularly exclusively to the pedal crank structure. The pedal crank structure may be arranged coaxially and/or parallelly to the second rotational interface, e.g. in order to drive and/or to be driven by the pedal crank structure.

The power split device may be coupled with a third rotational interface of the three rotational interfaces to the wheel hub, particularly exclusively to the wheel hub. The wheel hub may be arranged coaxially and/or parallelly to the third rotational interface, e.g. in order to drive and/or to be driven by the wheel hub.

The power split device may have an epicyclic gear and/or a planetary gearbox. The power split device may alternatively or additionally have a differential. The epicyclic gear, planetary gearbox and/or differential may comprise the three rotational interfaces.

The differential is typically understood as a gear train with three (or more) drive shafts as rotational interfaces. The differential typically has the property that the rotational speed of one shaft is the average of the speeds of the others. A common use of differentials is in vehicles, for example to allow the wheels at each end of a drive axle to rotate at different speeds while cornering. The differential may be used to combine the drive device, the pedal crank structure and the wheel hub for power transmission between each of those.

The planetary gearbox (especially an epicyclic gearbox or a planetary gearset), is a mechanical transmission system. There are typically three core components referred to with letters a), b) and c). a) Sun gear: This is preferably the central gear around which other gears rotate and/or revolve. b) Planetary gears: These are gears that revolve and/or rotate around the sun gear. There are usually two, three or more in number of planetary gears which are mounted on a common planetary carrier. The planetary gears typically revolve around the sun gear (revolution) and rotate on their axes (rotation). c) Ring gear or hollow gear: This is typically an external gear especially surrounding the other gears and with inward-facing or internal teeth that enclose the sun and planetary gears. It is typically larger in diameter, allowing the planetary gears and the sun gear to fit inside its periphery. The operational principle of the planetary gearbox typically relies on the distribution of input (moving), output (moving), and/or stationary (non-moving) designations amongst the sun, planetary gears / planetary carrier, and ring gears. The variation in these designations enables different speed-torque configurations. It is particularly preferred to apply involute gearing in the planetary gearbox. It is furthermore preferred to apply helical gearing in the planetary gearbox. The gears are preferably made of metal, especially steel or aluminum.

Elucidating the function of a planetary gearbox, in a basic configuration, when the sun gear is used as an input, and the planetary carrier is used as an output, the ring gear may be a stationary gear and fixed in place; In this setup, the input rotational speed is reduced while the output torque is increased. Alternatively, if the ring gear is used as an input with the planetary carrier as an output, and the sun gear is held stationary/fixed, the planetary gearbox operates as an increasing gearbox; It increases the rotational speed at the output while reducing the output torque. If the planetary carrier is used as an input and the sun gear as an output, with the ring gear held stationary/fixed, the gearbox behaves as a decreasing gearbox; The output rotational speed is reduced, and the output torque is increased. In a compound configuration, multiple sets of planetary gears (e.g. two or more) can be arranged in series to achieve a higher gear ratio.

It is a preferred option considered throughout the present disclosure to have all three components (sun, planetary carrier, and ring gears) optionally be an input, an output or stationary, especially controlled by means of the control device.

The arrangement of gears and their interaction in an epicyclic gear / a planetary gearbox allows for compact design, high power density, balanced load distribution, and efficient power transmission. Such a configuration is preferred due to high torque transmission, multiple gear ratios, and small size.

One of the three rotational interfaces, especially the first rotational interface may be a sun gear, especially coupled to the drive device, in particular the drive. As such, the drive device may be configured to drive and/or be driven by the first rotational interface, especially being a sun gear. It is particularly preferred that the drive device may drive the first rotational interface directly, e.g. wherein of the drive device, especially the drive, a rotor is coupled to the first rotational interface and a stator drives or is driven by the rotor. The first rotational interface may especially be arranged parallelly or coaxially with the pedal crank structure, e.g. in that the pedal crank structure runs in the middle of or centric to the first rotational interface.

One of the three rotational interfaces, especially the second rotational interface may be a ring gear and optionally connected to the pedal crank structure, and optionally connected to the further drive. The ring gear may have internal teeth (e.g. for the planetary gears) and/or external teeth (e.g. for the further drive). The drive device may be configured to drive and/or be driven by the second rotational interface, especially engaging with particularly external teeth of the second rotational interface. It is possible that the drive device may drive the second rotational interface directly, e.g. wherein of the drive device, especially the further drive, a rotor is coupled to the second rotational interface and a stator drives or is driven by the rotor. The second rotational interface may be arranged parallelly with the pedal crank structure. The further drive may be coupled via a gear to the second rotational interface, e.g. engaging with teeth of the second rotational interface, especially with teeth arranged on an outside and/or the external teeth. The second rotational interface is typically coupled, e.g. via the internal teeth, to the third rotational interface.

One of the three rotational interfaces, especially the third rotational interface may comprise a planetary carrier and optionally forming an output structure, e.g. a sprocket section or the like, especially for a direct connection with the wheel hub. The third rotational interface may comprise two or more planetary gears running in parallel with respect to each other. The planetary gears may engage with the second rotational interface and/or the internal teeth. The wheel hub may be configured to drive and/or be driven by the third rotational interface, especially engaging with the second rotational interface. It is particularly preferred that the third rotational interface may drive or be driven by the first rotational interface directly, e.g. wherein the sun gear or first rotational interface meshes with the planetary gears or the third rotational interface.

Particularly, one of the three rotational interfaces, especially the third interface may have planetary gears or planetary gear elements meshing with the sun gear and the ring gear. First gearwheels of the planetary gear elements may mesh with the sun gear and the ring gear. Alternatively, first gearwheels of the planetary gear elements may mesh with the sun gear (e.g. on one side of the planetary carrier) and second gearwheels of the planetary gear elements may mesh with the ring gear (e.g. on the other side of the planetary carrier). It may as well be that the first gearwheels, and preferably the second gearwheels, are arranged between two sections of the planetary carrier, so that the planetary gears or planetary gear elements are rotatably held within a carrier sandwiching said planetary gears or planetary gear elements. The two or more sections of the planetary carrier may be coupled with each other especially with said planetary gears or planetary gear elements in between. The first gearwheels may be smaller or larger (i.e. different) in diameter relative to the second gearwheels. The first and second gearwheels may be similar in diameter. The first and second gearwheels may run pairwise and coaxially coupled, e.g. supported by and/or beared with a bearing in the planetary carrier.

The rotational interfaces may be any one of a/the sun gear, a/the ring gear and a/the planetary carrier, so that different combinations of the epicyclic gear and/or planetary gearbox with respect to the three rotational interfaces are possible.

It is an option that the drive may serve as a variator motor varying an effective gear ratio by means of driving the first rotational interface, while the further drive may serve as a traction motor providing (additional) torque for propulsion / assistance in propulsion of the pedal vehicle.

In another implementation the power split device is configured to uncouple the pedal crank structure from the drive device, particularly from the drive and/or the further drive, especially when the traction loss event parameter indicates the traction loss. For example, the power split device may have the function to substantially disconnect the pedal cranks from a motor or actuator and/or from the wheel hub, and especially in case of a traction loss or an indication of a/the traction loss. As such, the power split device may provide an instantaneous reaction for provision of user feedback, for example so that the user feels the traction loss by pedalling against spontaneously less torque. This implementation could be realized by shutting off the drive coupled to the first rotational interface in that the drive can at least temporarily rotate at little to no torque.

In another implementation a first sensor configured to provide sensor data including an angular position of the pedal crank structure, the input torque, a pedal crank structure speed, a pedal vehicle speed, a torque and/or a/the cadence. The first sensor is typically coupled to the control device for transmission of the sensor data. The first sensor may be a speed, position and/or torque sensor with respect to the pedal crank structure. The control device may thus receive information about the current position, torque and/or speed at the pedals and process the information with respect to enhancing the traction.

A second sensor may be configured to provide sensor data including an angular position of the wheel hub, a torque at the wheel hub, a wheel hub speed and/or a a/the pedal vehicle speed. The second sensor is typically coupled to the control device for transmission of the sensor data. The second sensor may be a speed, position and/or torque sensor with respect to the wheel hub and/or the driven wheel. The control device may thus receive information about the current position, torque and/or speed at the wheel hub and process the information with respect to enhancing the traction.

There may be second sensors on two or more wheel hubs, e.g. on a front wheel hub and on a rear wheel hub. The control device may consider a difference between two of the second sensors, e.g. in order to provide information about the current traction and/or to provide the traction data. For example, when the difference in speed of the front wheel hub and the rear wheel hub is more than 1% or more than 5%, the traction loss may be indicated.

The control device is preferably configured to process the sensor data, especially the sensor data of the first and the second sensors, or the sensor data of one of the first and second sensors, or exclusively of the second sensor, in order to generate the traction data. As such, based on sensory input, the control device may provide sufficient information about the grip of the pedal vehicle which may be used for enhancing the grip and/or for increasing the safety by giving user feedback.

In another implementation the control device is configured to reduce the resistance torque and/or the torque applied to the wheel hub by at least or more than 1 %, 10 %, 25 %, 50 % or 75 %, or by 100 % (as a magnitude of reduction of torque), especially when the traction loss event parameter indicates the traction loss. Alternatively or additionally the control device is configured to shut off the resistance torque and/or the torque applied to the wheel hub when the traction loss event parameter indicates the traction loss. In other words, the user may be able to apply a lower torque and/or the cadence may increase rapidly and/or the torque at the wheel hub decreases, especially when the traction loss even is present, which thus reflects an inherent user feedback and especially affects or improves the current traction.

For example, the magnitude of reduction of torque can be conducted as a function of the traction loss event parameter. For example, when riding on ice, the magnitude of reduction of torque could be up to 100 %. For example, when riding on a road with sand, the magnitude of reduction of torque could be about 10 %. It could be that in the event of traction loss i) resistance torque is reduced, ii) application of torque is reduced, iii) or both. It could be that firstly application of torque is reduced, and that secondly resistance torque is reducing - or vice versa.

In another implementation the control device is configured to apply a torque profile to the pedal crank structure for provision of user feedback especially when the traction loss event parameter indicates the traction loss, particularly by controlling the drive device, particularly the drive and/or the further drive. The torque profile typically comprises a torque to be applied to the pedal crank structure which torque is variable as a function of the time and/or of the angular position of the pedal crank structure. The torque profile can reflect a repetitive pattern applied to the pedal crank structure, such as a rattling in terms of torque at the pedal crank structure to be perceived by the user.

With respect to the method proposed herein, as a first implementation, it may be provided that reducing the resistance torque comprises reducing a gear-ratio effective between the pedal crank structure and/or the drive device and the wheel hub, particularly by rotating and/or actuating the drive device. Alternatively or additionally it may be provided that reducing the resistance torque comprises downshifting by actuating the drive device. As such, the idea of the method could be implemented by shifting into a lower gear and/or realizing a lower gear, e.g. by means of driving the drive device, upon determining that a traction is lost or reduced.

In another implementation of the method only one of the drive and the further drive is being controlled, especially with regard to reducing the resistance torque and/or the torque transmission with the wheel hub, when the traction loss event parameter indicates the traction loss. Alternatively or additionally one of the drive and the further drive is being controlled, especially with regard to reducing the resistance torque and/or the torque transmission with the wheel hub, before or after the other one of the drive and further drive when the traction loss event parameter indicates the traction loss. Alternatively or additionally one of the drive and the further drive is being controlled, especially with regard to reducing the resistance torque and/or the torque transmission with the wheel hub, and the other one of the drive and further drive is deactivated when the traction loss event parameter indicates the traction loss. As per this implementation, it is considered which drive of the drive device is driven in case of traction loss. Furthermore the timing is considered.

Typically, the control device is configured to control the drive device, when the traction loss even parameter indicates the traction loss, within a certain timeframe, especially with respect to the traction loss event parameter indicating the traction loss. For example, the timeframe may amount between 0 seconds and 60 seconds. The timeframe may amount between 0 seconds and 10 seconds. Particularly, the timeframe may amount between 0 seconds and 1 second. In particular, the timeframe may amount between 0 seconds and 500 milliseconds. The timeframe could as well be limited to 250 or to 100 milliseconds. As such, the control device may control the drive device once the traction loss is detected within a reaction time that falls within the timeframe.

These and other aspects of the invention will be apparent from and elucidated with reference to the implementations / embodiments described hereinafter.

In the light of the present disclosure the word 'or' may be understood as and replaced by 'and/or'.

In the drawings:
Fig. 1 shows a pedal vehicle with a powertrain configured to transfer an input torque to a wheel hub in a side view; and
Fig. 2 shows a powertrain including a power split device in a sectional view through a pedal crank structure, the power split device and a drive device; and
Fig. 3 shows a pedal vehicle with a powertrain including a drive device with two drives, wherein one drive is coupled to a pedal crank structure and a further drive is coupled to a wheel hub.

### Description of implementations

The description contains procedural or methodical aspects upon describing structural features of the drive; the structural features can be understood well in that way. It is emphasized to the reader that such structural features can be lifted from the described context without hesitation or the question of an intermediate generalization to form aspects of the invention. It is also emphasized to the reader that any the structural features described in the following can be understood as individual aspects of the invention to distinguish from known solutions, despite being possibly lifted from the context.

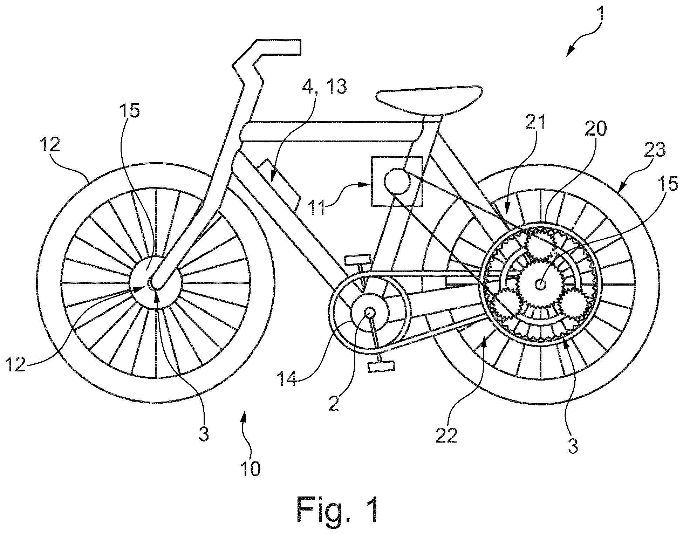

In Fig. 1, a first implementation of the present invention is shown. The shown pedal vehicle 1 in the form of a bicycle has a powertrain 10. The powertrain 10 is configured to transfer an input torque applied by a user at least partially to a wheel hub 3, especially to two wheel hubs 3 as there is a front wheel hub 3 and a rear wheel hub 3.

The input torque can be applied to a pedal crank structure 2, e.g. via the feet of the user to pedals of the pedal crank structure 2, and then transmitted in the form of power via a chain or belt and via a power split device 20 to the rear wheel hub 3. A transmission element, especially belt pulley or chainring or the like, for engagement with the chain or belt is mounted to rotate coaxially with the pedal crank structure 2.

The wheel hubs 3 are part of the powertrain 10 and/or of the pedal vehicle 1. The powertrain 10 has a drive device of which a drive 11 is coupled indirectly to the pedal crank structure 2 which has pedal cranks.

The drive 11 essentially serves as a variator motor varying an effective gear ratio as a function of rotational speed of the drive 11. Furthermore, drive 11 thereby assists in applying power to the rear wheel hub 3.

A further drive 12 of the drive device is coupled directly to the wheel hub 3 at the front wheel for torque transmission with the front wheel.

A battery 4 serves to store and to provide electrical energy, especially for driving/controlling the drive device. The drive device may store energy in the battery 4 by means of recuperation. The battery 4 may be removable from the pedal vehicle 1 for charging the battery 4.

The powertrain 10 furthermore has a control device 13, which control device 13 is configured to control the drive device, to receive traction data as an information about the current traction of the pedal vehicle 1 on the ground, and to determine a traction loss event parameter based on the traction data.

In order to provide feedback to the user, and in order to affect or improve the current traction, it is provided that the control device 13 is configured to reduce a resistance torque at the pedal crank structure 2, and to reduce a torque applied to either or to both wheel hubs 3, by controlling the drive device (i.e. the drive 11 and/or the further drive 12) when the traction loss event parameter indicates a traction loss of the pedal vehicle 1.

As such, the shown embodiment of the powertrain 10 fulfils the purpose to give feedback to the user once traction is lost or decreased. This can be conducted by reducing the resistance torque at the pedal crank structure 2 so that the user pedals against lower resistance. The resistance torque may be affected by driving the drive 11. The resistance torque may be reduced by shutting of the drive 11 so that the drive can spin freely.

The control device 13 is optionally configured to match a speed of the wheel hubs 3 with a speed of the pedal vehicle 1 when the traction loss event parameter indicates the traction loss by controlling the drive device. This can by done by controlling the drive device to reduce torque applied to the wheel hub(s) 3, and/or to stop further acceleration of the wheel hub(s) 3 or the drive device in terms of its rotation.

It may be that the drive 11, or the further drive 12, or the drive 11 and the further drive 12 are controlled, especially simultaneously.

The control device 13 is configured to deactivate the drive 11 and/or the further drive 12 when the traction loss event parameter indicates the traction loss.

The drive device is configured to assist in propulsion, i.e. to transmit an input power into kinetic energy of the pedal vehicle 1 including amendments in a gear ratio effective between pedal crank structure 2 and wheel hub 3 at least at the rear wheel.

In the present embodiment the drive 11 is not coupled directly to the pedal crank structure 2, but is coupled indirectly to the pedal crank structure 2 via a chain or belt coupled to a power split device 20 and another chain or belt coupled to the power split device 20 and the pedal crank structure 2. The drive device and the pedal crank structure 2 may affect each other in terms of rotation, e.g. the drive device affecting a gear-ratio by rotation of the drive at the power split device 20. The drive device does not have a downright connection to the pedal crank structure 2.

The power split device 20 has three rotational interfaces 21, 22, 23. Each of the three rotational interfaces 21, 22, 23 are coupled to another component or part. The rotational interfaces 21, 22, 23 are arranged coaxially.

The power split device 20 is coupled with a first rotational interface 21 (a planetary carrier or sun gear, as an example) exclusively and here via a chain or belt to the drive 11. The drive device is arranged to rotate in parallel to the first rotational interface 21. The drive device is arranged to rotate in parallel to the pedal crank structure 2 and the first rotational interface 21.

The power split device 20 is coupled with a second rotational interface 22 (a sun gear or ring gear, as an example) exclusively and here via a chain or belt to the pedal crank structure 2. The pedal crank structure 2 is arranged parallelly to the second rotational interface 22.

The power split device 20 is coupled with a third rotational interface 23 (a ring gear or planetary carrier, as an example) to the wheel hub 3 at the rear wheel, particularly exclusively. The wheel hub 3 is arranged in parallel to the third rotational interface 23. In particular, the third rotational interface 23 forms the wheel hub 3 at the rear wheel.

The power split device 20 is epicyclic gear and/or a planetary gearbox comprising the three rotational interfaces 21, 22, 23. The three rotational interfaces 21, 22, 23 can optionally be an input, an output or stationary, especially controlled by means of the control device 13.

In the embodiment of Fig. 1, the power split device 20 is configured to uncouple the pedal crank structure 2 from the (rear) wheel hub 3, especially when the traction loss event parameter indicates the traction loss. This may be realized by shutting of the drive 11 so that the drive 11 spins freely. As such, all rotational input from the user (and as well that from the wheel hub 3 at the rear wheel) would be directed to the first rotational interface 21 spinning the drive 11.

A first sensor 14 is configured to provide sensor data including a cadence, which first sensor 14 is coupled to the control device 13 for transmission of the sensor data. The first sensor 14 is a speed sensor arranged at the pedal crank structure 2. The control device 13 can receive information about the current speed at the pedals and process the information with respect to enhancing the traction.

A second sensor 15 is configured to provide sensor data including a speed of the rear wheel hub 3 and is coupled to the control device 13 for transmission of the sensor data. Another second sensor 15 is located at the front wheel hub 3. The second sensors 15 are a speed sensors with respect to the wheel hubs 3 and thus the driven wheels and/or all wheels. The control device 13 can receive information about the current speeds at the rear wheel hub 3 and/or the front wheel hub 3 and process the information with respect to enhancing the traction. For example, the current speed may be estimated or measured by means of the rotational speed of the drive device. The control device 13 is configured to process the sensor data of the first 14 and the second sensors 15 in order to generate the traction data.

The control device 13 is configured to reduce the resistance torque and the torque applied to the wheel hubs 3 by a magnitude of reduction of torque which is in this case, as an example, 100 %, when the traction loss event parameter indicates the traction loss. The control device 13 is configured to shut off the resistance torque and the torque applied to the wheel hub when the traction loss event parameter indicates the traction loss. The magnitude of reduction of torque can also be calculated in the control device 13 as a function of the traction loss event parameter.

The control device 13 is optionally configured to apply a torque profile to the pedal crank structure 2 by controlling the drive 11. The torque profile comprises a torque to be applied to the pedal crank structure 2 which torque is variable as a function of the time and/or angular position of the pedal crank structure 2. The torque profile reflects a repetitive pattern applied to the pedal crank structure 2, such as a rattling in terms of torque at the pedal crank structure 2.

The embodiment of Fig. 1 provides that a method to control the powertrain 10 can be conducted, especially by means of the control device 13. The method comprises (the steps of): receiving traction data; determining the traction loss event parameter based on the traction data; and reducing the resistance torque and the torque applied to the wheel hubs 3 when the traction loss event parameter indicates the traction loss by controlling the drive 11 and the further drive 12. The drive 11 and/or the further 12 could be shut off in the case of traction loss.

Reducing the resistance torque in the present case can also comprise reducing a gear-ratio effective between the pedal crank structure 2 and the and the wheel hub 3 at the rear wheel by rotating and/or changing the speed of the drive 11.

In the case of a traction loss, the control device 13 can optionally control only one or at least one of the drive 11 and the further drive 12. The drive 11 or further drive 12 can be controlled for example before or after the other one of the drive 11 and further drive 12. Also, one of the drive 11 and the further drive 12 can be controlled and the other one of the drive 11 and further drive 12 can be deactivated.

The embodiment of Fig. 1 furthermore provides to realize another method to control the powertrain 10, which method comprises (the steps of): receiving traction data as an information about the current traction of the pedal vehicle 1 equipped with the powertrain 10 on the ground, determining the traction loss event parameter based on the traction data, and reducing the torque transmission between the pedal crank structure 2 and the wheel hub 3 when the traction loss event parameter indicates the traction loss. Throughout this method, reducing is conducted by controlling the drive device of the powertrain 10. It is provided that the drive device comprises an electric drive, especially an electric actuator, and particularly that the drive device is comprised by a clutch device configured for coupling and for decoupling the pedal crank structure 2 to the wheel hub 3 and/or for torque transmission between the pedal crank structure 2 and the wheel hub 3. Reducing may include shutting off said torque transmission. The clutch device may be the power split device 20.

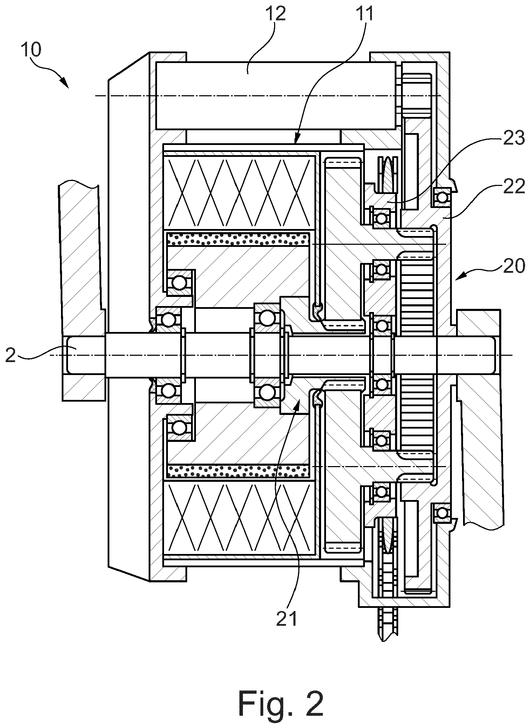

Fig. 2 shows another embodiment of a powertrain 10 for a pedal vehicle 1 configured to transfer an input torque applied by a user to a (not shown) wheel hub. The powertrain 10 has a drive device with a drive 11 and a further drive 12. The drives 11, 12 are electrical drives or motors each of which may optionally be operated as a generator for recuperation of energy and/or for providing resistance torque or the like. The drive 11 is coupled indirectly via a power split device 20 to a pedal crank structure 2. The further drive 12 is thus coupled indirectly via the power split device 20 to the wheel hub.

The power split device 20 has three rotational interfaces 21, 22, 23. The first rotational interface 21 is coupled directly to the drive 11. The second rotational interface 22 is coupled directly to the pedal crank structure 2. The third rotational interface 23 is coupled directly (typically with a chain or belt) to the wheel hub 3.

The first rotational interface 21 is a sun gear coupled to a rotor of the drive 11. As such, the drive 11 is configured to drive and/or be driven by the sun gear. The drive device can thus drive the sun gear directly. The sun gear is arranged coaxially with the pedal crank structure 2. The pedal crank structure 2 runs in the middle of or centric to the sun gear.

The second rotational interface 22 is a ring gear and connected not only directly to the pedal crank structure 2, but also directly to the further drive 12 to be driven by and to drive the further drive 12. The ring gear has internal teeth and external teeth arranged coaxially with respect to each other. The further drive 12 engages with the external teeth. The ring rear is arranged coaxially with the pedal crank structure 2, wherein the pedal crank structure 2 runs in the middle of or centric to the ring gear. The ring gear is coupled via the internal teeth to the third rotational interface 23.

The third rotational interface 23 has a planetary carrier with at least two planetary gear elements and forming an output structure with a sprocket section for a direct coupling or connection with the wheel hub. The planetary gear elements run in parallel with respect to each other. The planetary gear elements engage with the ring gear (internal teeth). The third rotational interface can drive or can be driven by the sun gear directly. The sun gear meshes with the planetary gear elements.

Here, first gearwheels of the planetary gear elements mesh with the sun gear and second gearwheels of the planetary gear elements mesh with the ring gear. The first gearwheels are larger in diameter relative to the second gearwheels. The first and second gearwheels run pairwise and coaxially coupled, especially supported by and beared with bearings in the planetary carrier.

Here, the drive 11 essentially serves as a variator motor varying an effective gear ratio by means of driving the first rotational interface 21 or sun gear, while the further drive 12 may serve as a traction motor providing (additional) torque for propulsion / assistance in propulsion of the pedal vehicle 1.

The drive device typically comprises electric motors as drives 11, 12. For example, DC motors may be adopted in the powertrain 10.

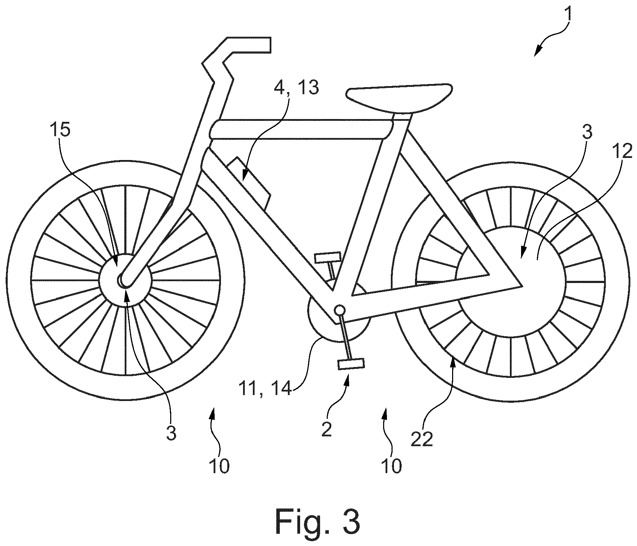

In Fig. 3 another implementation of the present invention is shown. The shown pedal vehicle 1 in the form of a bicycle has a powertrain 10 in a serial hybrid configuration.

The powertrain 10 is configured to transfer an input torque applied by a user at least partially to a wheel hub 3, especially to a rear wheel hub 3. The powertrain has a drive device with a drive 11 and a further drive 12. The drive 11 is coupled directly to a pedal crank structure 2 to directly receive the input torque. The drive 11 serves to convert the mechanical power applied by a user (input torque multiplied by cadence) into electric power / electricity / electric energy. The electric power can be directed to a battery 4 and/or to the further drive 12.

The battery 4 serves to store and to provide electrical energy, especially for driving/controlling the drive device. The drive device may store energy in the battery 4 by means of recuperation.

The further drive 12 is coupled directly to the rear wheel hub 3 to drive a rear tire or rear wheel substantially based on the electric power generated at the drive 11. The further drive 12 may alternatively or additionally be provided electric power from a battery 4.

The powertrain 10 furthermore has a control device 13, which control device 13 is configured to control the drive device, to receive traction data as an information about the current traction of the pedal vehicle 1 on the ground, and to determine a traction loss event parameter based on the traction data.

The control device 13 is configured to reduce a resistance torque at the pedal crank structure 2 and to reduce a torque applied to the wheel hub 3 by controlling the drive device when the traction loss event parameter indicates a traction loss of the pedal vehicle 1. Particularly, the drive 11 receiving the input torque may be switched off in case of the traction loss so that the user pedals through. Further, the further drive 12 applying the torque to the wheel hub 3 may be switched off in case of the traction loss so that the torque applied to the wheel hub 3 is reduced and the speed of the wheel hub 3 starts to adapt to the speed of the pedal vehicle 1 to finally match said speed of the pedal vehicle 1. Particularly, the drive 11 and/or further drive 12 may be used as a sensor to provide sensor data and/or traction data.

The powertrain 10 of Fig. 3 can be understood as a drive-by-wire powertrain. As such, there is no physical/mechanical coupling between the drive 11 and further drive 12 in terms of rotation, but there is rather an electrical coupling in terms of electrical power transmission. The electrical power transmission may be guided via the control device 13. The control device 13 can thus easily control based on the traction data and/or on the current traction the resistance torque by driving the drive 11, and optionally the torque applied to the wheel hub 3 by driving the further drive 12. This facilitates gaining traction again and thus increases safety.

Not shown is an implementation of a powertrain including a power split device with three rotational interfaces. In this implementation,
a drive is coupled to a sun gear as a first rotational interface,
a pedal crank structure is coupled to a planetary carrier as a second rotational interface, and
a wheel hub is coupled to a ring gear as a third rotational interface.

In this configuration, the drive needs to run in an opposite direction relative to the pedal crank structure to give positive power from drive and pedal crank structure to the wheel hub.

normally you want to couple the low torque motor input to the sun. In prior art, there are 2 layouts:- NexxtDrive: pedal to planet carrier, output to ring> motor needs to run in opposite direction to give positive power from motor and pedal

Not shown is another implementation of a powertrain including a power split device with three rotational interfaces. In this another implementation,
a drive is coupled to a sun gear as a first rotational interface,
a wheel hub is coupled to a planetary carrier as a second rotational interface, and
a pedal crank structure is coupled to a ring gear as a third rotational interface. In this configuration, the drive needs to run in the same direction relative to the pedal crank structure to give positive power from drive and pedal crank structure to the wheel hub.

### Reference signs list

- 1: pedal vehicle
- 2: pedal crank structure
- 3: wheel hub
- 4: battery

- 10: powertrain
- 11: drive
- 12: further drive
- 13: control device
- 14: sensor
- 15: sensor

- 20: power split device
- 21: rotational interface
- 22: rotational interface
- 23: rotational interface

## Claims

1. Powertrain (10) for a pedal vehicle (1), such as a bicycle, the powertrain (10) configured to transfer an input torque at least partially to a wheel hub (3), the input torque to be applied by a user to a pedal crank structure (2), the powertrain (10) comprising:
the pedal crank structure (2);
a drive device of which a drive (11) is configured to be coupled directly or indirectly to a pedal crank structure (2), and optionally of which a further drive (12) is configured to be coupled directly or indirectly to the wheel hub (3) for torque transmission with the wheel hub (3); and
a control device (13) that is configured to control the drive device, to receive traction data as an information about the current traction of the pedal vehicle (1) on the ground, and to determine a traction loss event parameter based on the traction data,
wherein in order to provide feedback to the user, and especially in order to affect or improve the current traction, the control device (13) is configured to reduce a resistance torque at the pedal crank structure (2), and optionally to reduce a torque applied to the wheel hub (3), by controlling the drive device when the traction loss event parameter indicates a traction loss of the pedal vehicle (1).

2. Powertrain (10) according to the preceding claim, wherein the control device (13) is configured to match a speed of the wheel hub (3) with a speed of the pedal vehicle (1) when the traction loss event parameter indicates the traction loss by controlling the drive device, particularly the drive (11) and/or the further drive (12), e.g. by reducing a torque applied to the wheel hub.

3. Powertrain (10) according to the preceding claim, wherein the control device (13) is configured to deactivate the drive device, particularly the drive (11) and/or the further drive (12), when the traction loss event parameter indicates the traction loss.

4. Powertrain (10) according to one of the preceding claims, wherein the drive device, particularly the drive (11), is coupled directly to the pedal crank structure (2), so that the drive device and the pedal crank structure (2) are fixedly coupled in terms of rotation, e.g. via one or more gears, a chain, a belt or via direct attachment.

5. Powertrain (10) according to one of the preceding claims, wherein the drive device, particularly the drive (11), is coupled indirectly to the pedal crank structure (2), so that the drive device and the pedal crank structure (2) at least affect each other in terms of rotation, e.g. allowing a certain slip and/or the drive device affecting a gear-ratio by its rotation and/or actuation.

6. Powertrain (10) according to one of the preceding claims, wherein a power split device (20) with three rotational interfaces (21, 22, 23) is provided, which power split device (20) is coupled
with a first rotational interface (21) of the three rotational interfaces (21, 22, 23) to the drive device, particularly the drive (11), and
with a second rotational interface (22) of the three rotational interfaces (21, 22, 23) to the pedal crank structure (2), and
with a third rotational interface (23) of the three rotational interfaces (21, 22, 23) to the wheel hub (3).

7. Powertrain (10) according to the preceding claim, wherein the power split device (20) has an epicyclic gear, a planetary gearbox or a differential comprising the three rotational interfaces (21, 22, 23).

8. Powertrain (10) according to one of the preceding two claims, wherein
the first rotational interface (21) is a sun gear,
the second rotational interface (22) is a ring gear and is optionally connected to the further drive (12), and
the third rotational interface (23) is a planetary carrier forming an output structure, e.g. a sprocket section, and having planetary gear elements meshing with the sun gear and the ring gear wherein optionally
first gearwheels of the planetary gear elements mesh with the sun gear and second gearwheels of the planetary gear elements mesh with the ring gear, and e.g.
the first and second gearwheels are different in diameter.

9. Powertrain (10) according to one of the preceding three claims, wherein the power split device (20) is configured to uncouple the pedal crank structure (2) from the drive device, particularly the drive (11) and/or the further drive (12), when the traction loss event parameter indicates the traction loss.

10. Powertrain (10) according to one of the preceding claims, comprising
a first sensor (14) configured to provide sensor data including an angular position of the pedal crank structure (2), the input torque, a pedal crank structure speed, a pedal vehicle speed and/or a cadence, wherein the first sensor (14) is coupled to the control device (13) for transmission of the sensor data, and/or
a second sensor (15) configured to provide sensor data including an angular position of the wheel hub (3), a torque at the wheel hub (3), a wheel hub speed and/or a/the pedal vehicle speed, wherein the second sensor (15) is coupled to the control device (13) for transmission of the sensor data, particularly wherein the control device (13) is configured to process the sensor data in order to generate the traction data.

11. Powertrain (10) according to one of the preceding claims, wherein the control device (13) is configured to
reduce the resistance torque and/or the torque applied to the wheel hub (3) by at least 1 %, 10 %, 25 %, 50 %, 75 % or by 100 %, and/or
shut off the resistance torque and/or the torque applied to the wheel hub (3) when the traction loss event parameter indicates the traction loss.

12. Powertrain (10) according to one of the preceding claims, wherein the control device (13) is configured to apply a torque profile to the pedal crank structure (2) for provision of user feedback when the traction loss event parameter indicates the traction loss, particularly by controlling the drive device, particularly the drive (11) and/or the further drive (12), particularly wherein the torque profile comprises a torque to be applied to the pedal crank structure (2) which torque is variable as a function of the time or of the angular position of the pedal crank structure (2).

13. Method to control the powertrain (10) according to one of the preceding claims, comprising,
receiving traction data,
determining a traction loss event parameter based on the traction data, and
reducing the resistance torque and/or the torque applied to the wheel hub (3) when the traction loss event parameter indicates the traction loss by controlling the drive device, particularly the drive (11) and/or the further drive (12).

14. Method according to the preceding claim, wherein reducing the resistance torque comprises
reducing a gear-ratio effective between the pedal crank structure (2) and the wheel hub (3) especially by rotating and/or actuating the drive device, and/or
downshifting by actuating the drive device.

15. Method according to one of the preceding claims, wherein
only one of the drive (11) and the further drive (12) is being controlled when the traction loss event parameter indicates the traction loss,
one of the drive (11) and the further drive (12) is being controlled before or after the other one of the drive and further drive (11, 12) when the traction loss event parameter indicates the traction loss, and/or
one of the drive (11) and the further drive (12) is being controlled and the other one of the drive and further drive (11, 12) is deactivated when the traction loss event parameter indicates the traction loss.

16. Method to control a powertrain (10) for a pedal vehicle (1), such as a bicycle, the powertrain (10) configured to transfer an input torque to a wheel hub (3), the input torque to be applied by a user to a pedal crank structure (2) of the powertrain (10), comprising
receiving traction data as an information about the current traction of a pedal vehicle (1) equipped with the powertrain (10) on the ground,
determining a traction loss event parameter based on the traction data, and reducing a torque transmission between a pedal crank structure (2) and the wheel hub (3) when the traction loss event parameter indicates a traction loss, wherein reducing is conducted by controlling drive device of the powertrain (10),
particularly which drive device comprises an electric drive (11, 12), especially an electric actuator,
particularly which drive device is comprised by a clutch device configured for coupling and for decoupling the pedal crank structure (2) to the wheel hub (3) and/or for torque transmission between the pedal crank structure (2) and the wheel hub (3), optionally wherein reducing includes shutting off said torque transmission, particularly wherein the clutch device is a power split device (20).
